# EUROPÄISCHE PATENTSCHRIFT

(11) **EP 3 743 314 B1**
(45) Veröffentlichungstag und Bekanntmachung des Hinweises auf die Patenterteilung: **09.03.2022**
(21) Anmeldenummer: 19700564.8
(22) Anmeldetag: 09.01.2019
(51) Int. Cl.: B60R 11/02

(54) **ANORDNUNG ZUR HALTERUNG EINES MOBILEN ENDGERÄTES SOWIE FAHRZEUG MIT EINER DERARTIGEN HALTERUNGSANORDNUNG**
ASSEMBLY FOR MOUNTING A MOBILE TERMINAL, AND VEHICLE COMPRISING SUCH A MOUNTING ASSEMBLY
AGENCEMENT DE MAINTIEN D'UN TERMINAL MOBILE ET VÉHICULE POURVU D'UN TEL AGENCEMENT DE MAINTIEN

(30) Priorität: 24.01.2018 DE 102018201123
(43) Veröffentlichungstag der Anmeldung: 02.12.2020
(73) Patentinhaber: Volkswagen Aktiengesellschaft, 38440 Wolfsburg (DE)
(72) Erfinder: LEUENBERGER, Jörn, 38102 Braunschweig (DE); HÜBNER, Peter Christian, 19258 Boizenburg (DE)
(86) Internationale Anmeldenummer: PCT/EP2019/050379
(87) Internationale Veröffentlichungsnummer: WO 2019/145143

(56) Entgegenhaltungen:
- DE-A1-102013 220 476
- DE-A1-102013 222 449
- DE-A1-102014 008 810
- DE-U1-202007 012 617
- DE-U1-202011 105 255

## Beschreibung

Die Erfindung betrifft eine Anordnung zur Halterung eines mobilen Endgerätes in oder an einem Fahrzeug nach dem Oberbegriff des Patentanspruchs 1 der Erfindung. Gemäß Anspruch 10 der Erfindung betrifft dieselbe ferner ein Fahrzeug mit einer derartigen Halterungsanordnung.

Die Bedeutung mobiler Endgeräte, wie Mobiltelefone und Smartphones und Tablet-Computer, als zentrale Kommunikationsmittel für Kunden steigt stetig. Eine gelungene Integration mobiler Endgeräte in ein Fahrzeug, insbesondere Kraftfahrzeug, ist ein Schlüsselelement für die zukünftige Kundenzufriedenheit. Neben der "elektrischen" Integration in insbesondere das Bedien- und Anzeigekonzept des Fahrzeugs hat die physische Integration, also die Ablage des mobilen Endgerätes im Fahrzeug, ebenso einen hohen Stellenwert. Besagte physische Integration unterliegt vielfältigen Anforderungen beispielsweise hinsichtlich ergonomischem Zugriff, Positionierung bei kontaktgebundener oder kontaktloser elektrischer Aufladung, Kabelführungen mit z.B. USB-Verbindungen, Vielfalt der Endgeräte-Geometrien, drahtgebundene oder drahtlose Koppelfunktion mit einer Antenne, Halterung/Sicherung bei dynamischer Fahrt, Schutz eines Displays des besagten Endgerätes u.v.m.

Die Sichtbarkeit des betreffenden mobilen Endgerätes in einer spezifischen Ablage während der Fahrt kann aus Sicherheitsgründen Einschränkungen unterliegen. Bekannte Sichtabdeckungen sind Einstecklösungen, Klappen, Schubladen, Trennwände und dgl. mehr.

So beschreibt die DE 10 2013 000 138 A1 eine Anordnung zur Aufnahme eines mobilen Endgerätes, hier als tragbares elektronisches Kommunikationsgerät bezeichnet, insbesondere in einem Fortbewegungsmittel, welches zumindest umfasst eine Blende mit einer Öffnung und eine Hubvorrichtung, wobei die Anordnung eingerichtet ist, das Kommunikationsgerät zumindest annähernd vollständig durch die Öffnung aufzunehmen und dasselbe zumindest anteilig durch die Öffnung wieder auszuwerfen. Hierzu verfügt die Anordnung über ein schwenkbares Element, welches fest mit einem Tragabschnitt zur Aufnahme des besagten Endgerätes verbunden ist. Im ausgeworfenen Zustand des Endgerätes soll dasselbe auf dem schwenkbaren Element in Richtung einer Horizontalen derart geschwenkt abgelegt sein, dass ein komfortables Betrachten des Displays des Kommunikationsgerätes möglich wird.

Die DE 10 2013 001 130 A1 offenbart ein Staufach für den Innenraum eines Fahrzeugs zur Aufnahme von Gegenständen, wie beispielsweis einem Mobiltelefon. Das Staufach weist einen Boden und eine umlaufende Seitenwand auf, welche einen Aufnahmeraum ausbilden. Für das Halten besagter Gegenstände ist zumindest eine Haltevorrichtung vorgesehen, die eine auf Zug belastbare, aufwickelbare Trennwand und eine Wickelvorrichtung für das Aufwickeln der Trennwand aufweist.

Die DE 10 2014 008 810 A1 zeigt eine Ladevorrichtung für ein mobiles Endgerät in einem Fahrzeug, umfassend eine Ladeeinheit zur induktiven Energieübertragung an das mobile Endgerät und eine Halteeinheit zum Halten des mobilen Endgerätes. Die Halteeinheit ist als Fach mit einer ersten Öffnung zum Einführen des mobilen Endgerätes ausgebildet. Zumindest ein Halteelement zur Erzeugung einer auf das mobile Endgerät in Richtung der Ladeeinheit wirkenden Haltekraft ist innerhalb des Faches angeordnet.

Die DE 10 2016 102 736 A1 beschreibt eine Mittelkonsole mit einem schwenkbaren Deckelelement, welches einen Aufnahmebereich zur Aufnahme eines mobilen Endgerätes sowie eine sogenannte Koppelbox umfasst, wobei die Koppelbox eine Ladevorrichtung zum Aufladen des mobilen Endgerätes, eine Verbindung desselben zu einer Außenantenne sowie Mittel zum Empfangen und Senden von Signalen zur Verfügung stellt.

Die vorstehend beschriebenen Lösungen des Standes der Technik mögen ihren bestimmungsgemäßen Zweck erfüllen. Ungeachtet dessen sind sie jedoch relativ aufwendig in der Herstellung und ergonomischen Handhabung, insbesondere bei der Bestückung der spezifischen Ablage mit dem mobilen Endgerät und der Entnahme desselben aus dieser Ablage, wodurch der Kunde gegebenenfalls diese als unkomfortabel wahrnimmt.

Die US 2013 / 0 134 282 A1 offenbart demgegenüber einen auf eine Auflagefläche positionierbaren Halter für ein elektronisches Gerät. Explizit wird ausgeführt, dass der Halter derart positionierbar ist, dass das elektronische Gerät respektive dessen Bildschirm und/oder die Bedienelemente für einen Benutzer sichtbar ist/sind. Der Halter hält dabei das elektronische Gerät mittels einer hinteren Stütze in einem Winkel, welcher überdies mittels Distanzscheibe variabel einstellbar ist. Bei der Auflagefläche kann es sich um das Armaturenbrett eines Kraftfahrzeugs handeln. Diese Lösung mag zwar eine ergonomische Handhabung bei der Bestückung des Halters mit einem elektronischen Gerät, wie einem mobilen Endgerät gewährleisten, jedoch ist sie nicht geeignet, aus Sicherheitsgründen die Sichtbarkeit der Bedien- und/oder Anzeigefläche des mobilen Endgeräts für den Fahrzeugführer zwingend einzuschränken.

Die DE 10 2015 202 254 A1 offenbart eine Ablagefach in Form eines nach oben offenen Behälters innerhalb beispielsweise einer Mittelkonsole eines Fahrzeugs, insbesondere Kraftfahrzeugs, mit Aufnahmeschächten für tragbare elektronische Bildschirmgeräte, wie Tablet-Computer, Smartphone und dergleichen. Die Aufnahmeschächte können in einer Vertikalen oder schräg zur Vertikalen ausgerichtet sein. Über eine etwaige Einsehbarkeit der Bedien- und/oder Anzeigefläche des betreffenden Bildschirmgerätes schweigt sich diese Druckschrift aus.

Die DE 20 2007 012 617 U1 offenbart einen Getränkebehälter in einem Fahrzeug, welchem ein als Wechseleinsatz ausgebildeter Adapter zur sicheren Halterung und explizit leichten Bedienung eines Handys zugeordnet ist. Der Adapter weist eine schräg stehende Lagerschale auf. Auch diese Lösung mag zwar eine ergonomische Handhabung bei der Bestückung des Halters mit Handy gewährleisten, jedoch ist sie nicht geeignet, aus Sicherheitsgründen die Sichtbarkeit der Bedien- und/oder Anzeigefläche des mobilen Endgeräts für den Fahrzeugführer zwingend einzuschränken.

Die US 2018 / 0 001 835 A1 offenbart eine Kombination aus einem Becherhalter und einem Mobiltelefonhalter innerhalb einer Fahrgastzelle eines Fahrzeugs. Der Becherhalter samt Mobiltelefonhalter lässt sich um 360° drehen bzw. schwenken, so dass sowohl der Fahrer als auch der Beifahrer das Mobiltelefon gut sehen und darauf zugreifen können. Auch diese Lösung mag zwar eine ergonomische Handhabung bei der Bestückung des Halters mit Handy gewährleisten, jedoch ist sie nicht geeignet, aus Sicherheitsgründen die Sichtbarkeit der Bedien- und/oder Anzeigefläche des mobilen Endgeräts für den Fahrzeugführer zwingend einzuschränken.

Die US 2012 / 0 161 406 A1 offenbart einen an einem Einkaufswagen anbringbaren Halter für ein mobiles Endgeräte, wobei der Halter für eine Vielzahl Abmessungen besagter Endgeräte konfiguriert ist. Der Halter kann dabei in einer geneigten Anordnung montiert und/oder schwenkbar ausgebildet sein, um das Endgerät besser einsehen zu können.

Die DE 10 2013 22 2 449 A1 offenbart eine Vorrichtung nach dem Oberbegriff von Anspruch 1 zum Halten flacher in etwa rechteckiger
Geräte, wie Tablet-Computer oder Mobiltelefone im Innenraum eines Kraftfahrzeugs mit einer Befestigungseinrichtung zur Befestigung der Vorrichtung an einem Fahrzeugbauteil sowie mit einem Halter zur Aufnahme der Geräte. Die Vorrichtung soll eine bequeme Benutzung der Geräte wahlweise durch den Fahrer oder den Beifahrer in unterschiedlichen Gebrauchsstellungen ermöglichen, ohne die Bedienung des Fahrzeugs zu behindern oder einzuschränken oder die Fahrzeuginsassen zu gefährden. Die Vorrichtung weist dazu einen am Fahrzeugbauteil, wie einer Mittelkonsole des Fahrzeugs, schwenkbar angelenkten Schwenkarm auf, an dessen freiem Ende der Halter dreh- und schwenkbar angelenkt ist. Auch diese Lösung mag zwar eine ergonomische Handhabung des Halters samt Handy gewährleisten, jedoch ist sie nicht geeignet, aus Sicherheitsgründen die Sichtbarkeit der Bedien- und/oder Anzeigefläche des mobilen Endgeräts für den Fahrzeugführer zwingend einzuschränken.

Aus der DE 20 2007 012 617 U1 ist eine Vorrichtung mit einem Einsatz zum Halten von Getränkebehältern in einem Passagierraum eines Fahrzeugs bekannt. Der Einsatz kann mit mindestens einer Lagerschale zur Fixierung von Kleingeräten, wie einem Handy, ausgebildet sein oder mit entsprechenden Wechseleinsetzen bestückbar sein. Bei dem besagten Einsatz handelt es sich um einen Grundkörper zur Aufnahme beispielsweise einer Flasche oder eine Dose, welcher drehbar ausgebildet ist. Hierdurch ist das Handy bei sicherer Ausrichtung direkt auf die betreffende Person ermöglicht. Auch diese Lösung mag zwar eine ergonomische Handhabung des Einsatzes samt Handy gewährleisten, jedoch ist sie nicht geeignet, aus Sicherheitsgründen die Sichtbarkeit der Bedien- und/oder Anzeigefläche des mobilen Endgeräts für den Fahrzeugführer zwingend einzuschränken.

Aus der DE 20 2011 105 255 U1 ein Halter für elektronische Kleingeräte, insbesondere Smartphones, in Kraftfahrzeugen bekannt, welcher in einen standardisierten Getränkehalter passt und ohne eine feste Verbindung mit Bauteilen des Fahrzeugs dort hineingestellt und einfach wieder entfernt werden kann. Durch eine vordere Aussparung soll das Display des Smartphones frei bleiben, so dass die Anzeigen sichtbar und Bedienelemente auch im Halter zugänglich sind. Auch diese Lösung mag zwar eine ergonomische Handhabung des Einsatzes samt Handy gewährleisten, jedoch ist sie nicht geeignet, aus Sicherheitsgründen die Sichtbarkeit der Bedien- und/oder Anzeigefläche des mobilen Endgeräts für den Fahrzeugführer zwingend einzuschränken.

Aus der DE 10 2013 220 476 A1 ist eine Haltevorrichtung für ein Mobiltelefon in einem Fahrzeug bekannt, welche ein Aufnahmefach für das Mobiltelefon aufweist. Das Mobiltelefon ist mittels einer Federeinrichtung, wie einer Klemmspange, im Aufnahmefach gehalten, indem besagte Klemmspange gegen eine Gehäusewand des Aufnahmefachs federnd vorgespannt ist.

Gemäß einem Aspekt der Erfindung ist es Aufgabe derselben, eine im Hinblick auf den Stand der Technik alternative Anordnung zur Halterung eines mobilen Endgerätes in oder an einem Fahrzeug zu schaffen, welche einfach und kostengünstig in der Herstellung ist und eine komfortable Handhabung des mobilen Endgerätes bei der Bestückung einer spezifischen Ablage mit demselben und der Entnahme desselben aus dieser Ablage gewährleistet sowie aus Sicherheitsgründen wirkungsvoll verhindert, dass der Fahrzeugführer infolge insbesondere optischer Signale eines bestimmungsgemäß in der besagten Ablage positionierten mobilen Endgerätes abgelenkt und zu das Führen des Fahrzeugs nachteilig beeinflussenden Handhabungen des besagten Endgerätes animiert wird. Gemäß einem weiteren Aspekt der Erfindung ist es Aufgabe derselben, ein Fahrzeug mit einer derartigen Halterungsanordnung zur Verfügung zu stellen.

Ausgehend von einer Anordnung zur Halterung eines mobilen Endgerätes in oder an einem Fahrzeug, mit einer Haltekonsole, welche einen Aufnahmeabschnitt für das besagte mobile Endgerät aufweist, wobei der Aufnahmeabschnitt ausgehend von einer Vertikalen eine zu derselben geneigt angeordnete Anlagefläche, an welcher das mobile Endgerät während der bestimmungsgemäßen Anordnung desselben im Aufnahmeabschnitt mit einer Rückwand anliegt, sowie einen den Aufnahmeabschnitt nach unten begrenzenden und das mobile Endgerät nach unten abstützenden Boden aufweist, wird die gestellte Aufgabe dadurch gelöst, dass infolge einer zwingenden Anordnung der Haltekonsole in dem Fahrzeug und besagter bestimmungsgemäßer Anordnung des mobilen Endgerätes in der Haltekonsole eine eine Bedien- und/oder Anzeigefläche aufweisende Frontseite des mobilen Endgerätes so geneigt angeordnet ist, dass keine Sichtbedingung zwischen einem von der Bedien- und/oder Anzeigefläche ausgehenden Lichtstrahl und einem Sichtstrahl eines Fahrzeugführers geometrisch erfüllt ist, wobei jedoch bevorzugt eine Sichtbedingung zwischen einem von der Bedien- und/oder Anzeigefläche ausgehenden Lichtstrahl und einem Sichtstrahl eines etwaigen Beifahrers des Fahrzeugs geometrisch erfüllt ist.

Hierdurch ist vorteilhaft verhindert, zumindest jedoch die Gefahr minimiert, dass der Fahrzeugführer während der Fahrt infolge optischer Signale des bestimmungsgemäß in der Haltekonsole positionierten mobilen Endgerätes abgelenkt und gegebenenfalls zu das Führen des Fahrzeugs nachteilig beeinflussenden Handhabungen des besagten Endgerätes animiert wird. Ein von der Bedien- und/oder Anzeigefläche ausgehender Lichtstrahl wird somit nicht in Richtung des Sichtstrahls des Fahrzeugführers ausgesendet. Noch einfacher ausgedrückt bedeutet dies, dass das mobile Endgerät immer so in der Haltekonsole positioniert bzw. in dieselbe gesteckt ist, dass die Bedien- und/oder Anzeigefläche nicht vom Fahrzeugführer einsehbar ist.

Gemäß einer bevorzugten Ausführungsform der Erfindung ist vorgesehen, dass bei besagter bestimmungsgemäßer Anordnung des mobilen Endgerätes in der Haltekonsole die eine Bedien- und/oder Anzeigefläche aufweisende Frontseite des mobilen Endgerätes so geneigt angeordnet ist, dass eine Sichtbedingung zwischen einem von der Bedien- und/oder Anzeigefläche (ausgehenden Lichtstrahl und einem Sichtstrahl eines Beifahrers des Fahrzeugs geometrisch erfüllt ist.

Ferner ist die besagte Haltekonsole bevorzugt in einer Mittelkonsole des Fahrzeugs, insbesondere Kraftfahrzeugs, weiter bevorzugt in einer Aufnahmemulde der Mittelkonsole angeordnet. Durch diese Anordnung der Haltekonsole im Fahrzeug ist in vorteilhafter Weise eine einfache Handhabung des mobilen Endgerätes bei der Bestückung der Haltekonsole mit dem mobilen Endgerät und bei Entnahme desselben aus der Haltekonsole mit einer Nicht-Einsehbarkeit der Bedien- und/oder Anzeigefläche des gehalterten mobilen Endgeräts durch den Fahrzeugführer kombiniert.

Um insbesondere bei dynamischer Fahrt ein Herausfallen des mobilen Endgerätes aus der Haltekonsole wirkungsvoll zu verhindern, ist/sind der Anlagefläche gegenüberliegend zumindest ein Halteelement angeordnet und/oder eine Haltegeometrie der Haltekonsole ausgebildet.

Das zumindest eine Halteelement und/oder die Haltegeometrie sind bevorzugt derart ausgebildet und orientiert, dass ausgehend vom Boden des Aufnahmeabschnittes ein sich nach oben erweiternder Aufnahmebereich respektive ein Aufnahmefach bzw. Einsteckfach für das mobile Endgerät ausgebildet ist. Dies hat den Vorteil einer einfachen und weitestgehend ungehinderten Bestückung der Haltekonsole mit dem mobilen Endgerät.

Um das gehalterte mobile Endgerät noch besser vor einem Herausfallen aus der Haltekonsole zu bewahren, sind die Haltekonsole und/oder das zumindest eine Halteelement bevorzugt derart ausgebildet, dass das gehalterte mobile Endgerät sowohl an seiner Rückwand und seiner Frontseite als auch zu zumindest einer Seitenkante desselben hin begrenzt ist.

Um eine komfortable Entnahme des gehalterten mobilen Endgerätes aus der Haltekonsole zu ermöglichen, kann des Weiteren vorgesehen sein, dass die Haltekonsole im Bodenbereich derselben eine Eingriffsvertiefung aufweist oder ausbildet, welche Eingriffsvertiefung von der der Anlagefläche gegenüberliegenden Seite der Haltekonsole her manuell erreichbar ist. Hieraus resultiert ferner die Erkenntnis, dass der Boden der Haltekonsole nicht vollflächig bzw. durchlaufend ausgebildet sein muss, sondern auch nur abschnittsweise bzw. lokal ausgebildet sein kann, um das mobile Endgerät nach unten abzustützen, welches demgemäß durch die Erfindung mit erfasst ist.

Um eine Beschädigung des mobilen Endgerätes und/oder Klappergeräusche durch Relativbewegung des mobilen Endgerätes zur Haltekonsole während der Fahrt zu verhindern, weist die Haltekonsole zumindest abschnittsweise eine elastomere Beschichtung auf oder ist durch ein Elastomer gebildet.

Um die Anlagefläche der Haltekonsole bezüglich der vorerwähnten Nicht-Einsehbarkeit der Bedien- und/oder Anzeigefläche des gehalterten mobilen Endgeräts durch den Fahrzeugführer an unterschiedliche Randbedingungen, wie Körpergröße des Fahrzeugführers, Sitzhöhenverstellung etc. und einen daraus resultierenden imaginären Sichtstrahl des Fahrzeugführers anpassen zu können, ist in Fortbildung der Erfindung besagte Anlagefläche in ihrem Neigungswinkel "α" verstell- bzw. einstellbar ausgebildet, wobei die orthogonale Orientierung des Bodens zur Anlagefläche beibehalten wird.

Die Erfindung betrifft ferner ein Fahrzeug mit einer Anordnung der vorbeschriebenen Art.

Nachstehend wird die Erfindung anhand eines in den Zeichnungen schematisch dargestellten Ausführungsbeispiels näher erläutert. Sie ist jedoch nicht auf dieses beschränkt, sondern erfasst alle durch die Patentansprüche definierten Ausgestaltungen. Es zeigen:
- Fig. 1: einen Ausschnitt einer Fahrgastzelle eines Kraftfahrzeugs mit Blick auf eine Mittelkonsole der Fahrgastzelle,
- Fig. 2: eine Detaildarstellung der Mittelkonsole nach Fig. 1 mit einer erfindungsgemäßen Halterungsanordnung gemäß einer ersten vorteilhaften Ausführungsvariante der Erfindung,
- Fig. 3: den Schnitt "I-I" nach Fig. 2,
- Fig. 4: die Halterungsanordnung gemäß einer zweiten vorteilhaften Ausführungsvariante der Erfindung,
- Fig. 5: die Halterungsanordnung gemäß einer dritten vorteilhaften Ausführungsvariante der Erfindung, und
- Fig. 6: die Halterungsanordnung gemäß einer vierten vorteilhaften Ausführungsvariante der Erfindung.

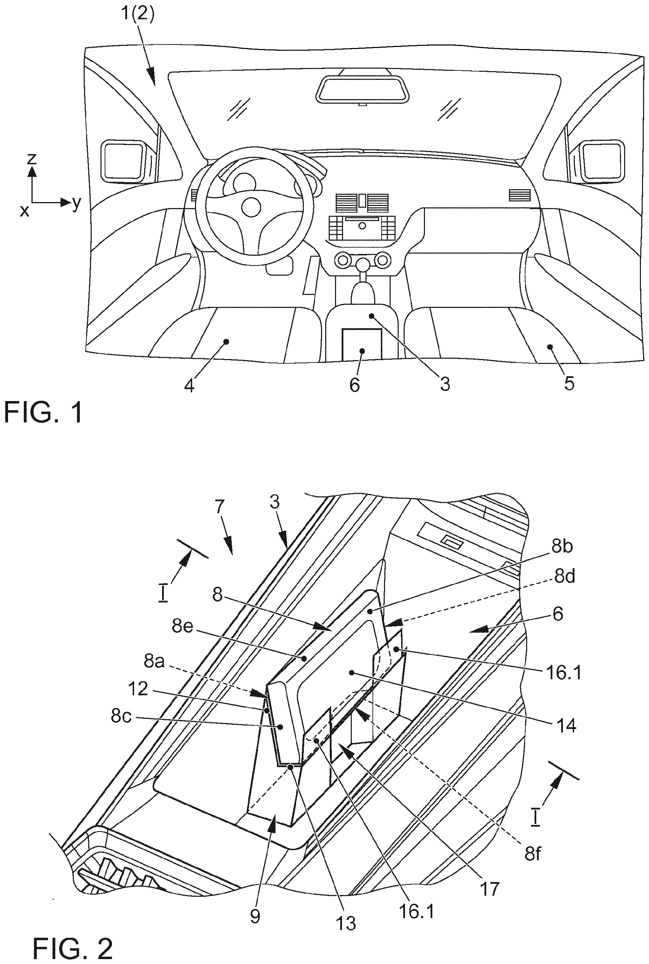

Fig. 1 zeigt das Innere der Fahrgastzelle 1 eines Fahrzeugs 2, vorliegend eines Kraftfahrzeugs mit einer Mittelkonsole 3, welche Mittelkonsole 3 zwischen einem Fahrersitz 4 und einem Beifahrersitz 5 angeordnet ist. Die Mittelkonsole 3 weist eine Aufnahmemulde 6 für etwaige im Fahrzeug 2 mitzuführende Gegenstände auf. Darüber hinaus weist das Fahrzeug 2 eine Anordnung 7 zur Halterung eines mobilen Endgerätes 8 auf. Unter einem mobilen Endgerät 8 wird im Allgemeinen ein aufgrund seiner Größe und seines Gewichts ohne größere körperliche Anstrengung tragbares und somit mobil einsetzbares Gerät verstanden, welches für mobile, netzunabhängige Daten-, Sprach- und/oder Bildkommunikation und/oder Navigation ausgebildet ist. Im Besonderen werden unter mobilen Endgeräten 8 Mobiltelefone, wie Smartphones, sowie Tablet-Computer, Personal Digital Assistants (PDAs), GPS-Geräte (GPS = Global Positioning System), Notebooks, Netbooks und dgl. mehr verstanden.

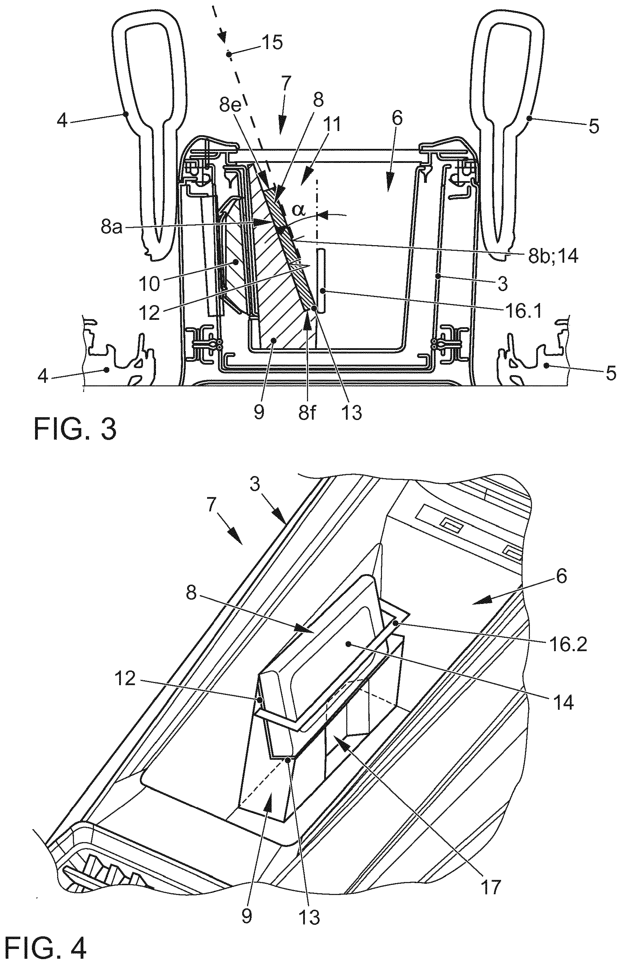

Ausführungsvariante 1 (Fig. 2 und 3):
Im Hinblick auf Fig. 2 ist besagte Anordnung 7 zur Halterung des betreffenden mobilen Endgerätes 8 gemäß diesem bevorzugten Ausführungsbeispiel durch eine Haltekonsole 9 zur Halterung des vorliegend äußerst schematisch dargestellten mobilen Endgerätes 8 gebildet, welche Haltekonsole 9 innerhalb der Aufnahmemulde 6 der Mittelkonsole 3 unmittelbar benachbart zu einer sogenannten Koppelbox 10 (vgl. Fig. 3) angeordnet ist. Die besagte Koppelbox 10 stellt bevorzugt eine Ladevorrichtung zum elektrischen Aufladen des mobilen Endgerätes 8, weiter bevorzugt bewirkt durch induktive Koppelfunktion, eine Verbindung des mobilen Endgerätes 8 zu einer Außenantenne sowie Mittel zum Empfangen und Senden von Signalen zur Verfügung. Die Haltekonsole 9 besteht bevorzugt aus einem Kunststoff und ist durch einen Formkörper gebildet, welcher einen Aufnahmeabschnitt 11 für das mobile Endgerät 8 ausbildet.

Der besagte Aufnahmeabschnitt 11 weist ausgehend von einer Vertikalen eine zu derselben geneigt angeordnete Anlagefläche 12 für das mobile Endgerät 8 sowie einen den Aufnahmeabschnitt 11 nach unten begrenzenden und das mobile Endgerät 8 nach unten abstützenden Boden 13 auf. Der Neigungswinkel "α" der Anlagefläche 12 ist bevorzugt zwischen 15° und 25° gewählt und beträgt gemäß diesem Ausführungsbeispiel etwa 20°. Die Anlagefläche 12 der Haltekonsole 9 ist benachbart der Koppelbox 10 angeordnet, woraus eine geringe Beabstandung zwischen dem mobilen Endgerät 8 und der Koppelbox 10 resultiert, die sich wiederum vorteilhaft auf das Ladeverhalten zur elektrischen Aufladung des mobilen Endgerätes 8 infolge induktiver Kopplung auswirkt.

Das mobile Endgerät 8 verfügt über eine Rückwand 8a, eine Frontseite 8b mit einer Bedien- und Anzeigefläche 14, insbesondere als Display, vorzugsweise als Touch-Display ausgebildet, sowie in Abhängigkeit der individuellen Anordnung des mobilen Endgerätes 8 in der Haltekonsole 9 über zwei Seitenkanten 8c, 8d sowie eine Oberkante 8e und eine Unterkante 8f. Das mobile Endgerät 8 ist mittels der Unterkante 8f auf dem Boden 13 abgestützt und liegt mit seiner Rückwand 8a an besagter Anlagefläche 12 an. Hierdurch ist eine Beeinträchtigung respektive Beschädigung der Bedien- und Anzeigefläche 14 durch die Haltekonsole 9 vermieden.

Wie den Fig. 2 und 3 weiter zu entnehmen ist, ist der Boden 13 orthogonal zur geneigten Anlagefläche 12 orientiert. Wie bereits oben dargetan, ist durch die geneigte Anlagefläche 12 und den orthogonal zu derselben orientierten Boden 13, auf welchem das mobile Endgerät 8 nach unten abgestützt ist, gewährleistet, dass das in der Haltekonsole 9 positionierte mobile Endgerät 8 zumindest bei normaler Fahrt stabil, d.h. ohne Kippen an der Anlagefläche 12 anliegt.

Wie den Fig. 2 und 3 noch zu entnehmen ist, ist gemäß diesem Ausführungsbeispiel die Haltekonsole 9 derart zwingend in der Aufnahmemulde 6 der Mittelkonsole 3 angeordnet, dass das gehalterte mobile Endgerät 8 sich in Fahrzeuglängsrichtung (X-Richtung) erstreckt und deren Bedien- und Anzeigefläche 14 vom Fahrersitz 4 respektive einem auf demselben sitzenden Fahrzeugführer weg und zum Beifahrersitz 5 bzw. zu einem auf demselben sitzenden Beifahrer hin gerichtet ist. Darüber hinaus ist die Haltekonsole 9 mit ihrer Anlagefläche 12 derart zum Fahrersitz 4 bzw. zum Fahrzeugführer hin geneigt ausgebildet, dass besagte Bedien- und Anzeigefläche 14 des in der Haltekonsole 9 gehaltenen mobilen Endgeräts 8 vom Fahrzeugführer nicht, jedoch von einem etwaigen Beifahrer einsehbar ist. Im Hinblick darauf zeigt Fig. 3 äußerst schematisch einen sich daraus ergebenden imaginären Sichtstrahl 15 eines nicht zeichnerisch dargestellten, auf dem Fahrersitz 4 positionierten Fahrzeugführers, welcher Sichtstrahl 15 anzeigt, dass die Bedien- und Anzeigefläche 14 des mobilen Endgerätes 8 vom Fahrzeugführer nicht einsehbar ist.

Anders ausgedrückt, ist infolge einer zwingenden Anordnung der Haltekonsole 9 in dem Fahrzeug 2 und bestimmungsgemäßer Anordnung des mobilen Endgerätes 8 in der Haltekonsole 9 die die Bedien- und/oder Anzeigefläche 14 aufweisende Frontseite 8b des mobilen Endgerätes 8 so geneigt angeordnet, dass zwar eine Sichtbedingung zwischen einem nicht zeichnerisch dargestellten und von der Bedien- und/oder Anzeigefläche 14 ausgehenden Lichtstrahl und einem nicht zeichnerisch dargestellten Sichtstrahl eines etwaigen Beifahrers, jedoch keine Sichtbedingung zwischen einem nicht zeichnerisch dargestellten und von der Bedien- und/oder Anzeigefläche 14 ausgehenden Lichtstrahl und dem Sichtstrahl 15 des Fahrzeugführers geometrisch erfüllt ist. Ein von der Bedien- und/oder Anzeigefläche14 ausgehender Lichtstrahl wird somit zwingend nicht in Richtung des Sichtstrahls 15 des Fahrzeugführers ausgesendet, sondern nur in Richtung eines etwaigen Beifahrers.

Um insbesondere bei dynamischer Fahrt ein Herausfallen des mobilen Endgerätes 8 aus der Haltekonsole 9 wirkungsvoll zu verhindern, sind gemäß den Fig. 2 und 3 der Anlagefläche 12 gegenüberliegend zwei beabstandet zueinander angeordnete Halteelemente 16.1 vorgesehen und an der Haltekonsole 9 befestigt. Die Fügeverbindung zwischen der Haltekonsole 9 und den Halteelementen 16.1 kann form-, kraft- und/oder stoffschlüssiger Art sein. Die Halteelemente 16.1 sind vorliegend plattenförmig ausgebildet und derart orientiert, dass ausgehend vom Boden 13 des Aufnahmeabschnittes 11 ein sich nach oben erweiternder Aufnahmebereich respektive ein sich nach oben erweiterndes Aufnahmefach bzw. ein Einsteckfach für das mobile Endgerät 8 ausgebildet ist. Dies hat den Vorteil einer einfachen und weitestgehend ungehinderten Bestückung der Haltekonsole 9 mit dem mobilen Endgerät 8.

Im Bereich der Beabstandung zwischen den beiden Halteelementen 16 ist im Bodenbereich der Haltekonsole 9 eine Eingriffsvertiefung 17 ausgebildet, welche Eingriffsvertiefung 17 von der der Anlagefläche 12 gegenüberliegenden Seite der Haltekonsole 9 her manuell erreichbar ist. Hierdurch ist eine komfortable Entnahme des gehalterten mobilen Endgerätes 8 aus der Haltekonsole 9 ermöglicht, indem beispielsweise der Fahrzeugführer über das gehalterte mobile Endgerät 8 hinweg in die Eingriffsvertiefung 17 und unter das dieselbe überspannende mobile Endgerät 8 greift und so dieses aus dem Aufnahmeabschnitt 11 herausheben kann. Der Boden 13 ist demnach gemäß diesem Ausführungsbeispiel nicht vollflächig ausgebildet.

Wie bereits oben dargetan, umfasst die Erfindung demnach auch einen Boden 13, der sowohl vollflächig oder durchlaufend als auch nur lokal, d.h. nicht vollflächig oder nicht durchlaufend ausgebildet ist. So kann das gehalterte mobile Endgerät 8 beispielsweise bodenseitig nur in Endabschnitten desselben abgestützt sein. Der Boden 13 kann dabei z. B. allein durch ein, zwei oder mehrere, nicht zeichnerisch dargestellte Stabelemente gebildet sein. Ebenso verhält es sich mit der Anlagefläche 12 der Haltekonsole 9. Auch diese muss nicht vollflächig oder durchgängig ausgebildet sein, sondern kann beispielsweise ebenfalls allein durch ein, zwei oder mehr Stabelemente gebildet sein, die sich zueinander mit Abstand entlang des mobilen Endgeräts 8 erstrecken und dieses rückwandseitig abstützen. Die Begriffe Boden 13 und Anlagefläche 12 sind demnach nicht auf großflächige Stützflächen beschränkt, sondern erfassen auch flächenmäßig gering dimensionierte Stützmittel bis hin zur linien- oder punktförmigen Kontaktierung des gehalterten mobilen Endgerätes 8 durch besagte Stützmittel, wenn die Stützmittel beispielsweise im Hinblick auf eine linienförmige Kontaktierung durch Rundprofilstäbe gebildet sind (nicht zeichnerisch dargestellt).

Um eine Beschädigung des mobilen Endgerätes 8 und/oder Klappergeräusche während der Fahrt zu verhindern, weist die Haltekonsole 9 zumindest abschnittsweise, d. h., in relevanten Kontaktbereichen mit dem mobilen Endgerät 8 eine nicht zeichnerisch dargestellte elastomere Beschichtung auf oder ist durch ein Elastomer gebildet. Die Kunststoff-Beschichtung kann beispielsweise nach einem an sich bekannten Kunststoff-Spritzgießverfahren auf besagte Kontaktbereiche aufgespritzt sein. Darüber hinaus kann besagte Beschichtung beispielsweise auch durch Beflocken der Kontaktbereiche mit insbesondere Kunststofffasern, auch als Flockfasern bezeichnet, bewirkt sein, indem auf die Kontaktbereiche Klebstoff aufgetragen wird und im Anschluss daran die Flockfasern aufgebracht werden. Die Flockfasern sind einenends im Kunststoff verankert und werden dann anschließend mit einer elektrischen Ladung beaufschlagt. Besagte Ladung bewirkt, dass sich die Flockfasern in diesem Feld senkrecht ausrichten und nach dem Trocknen oder Abbinden des Klebstoffes in demselben fixiert sind (nicht zeichnerisch dargestellt).

Um die Anlagefläche 12 der Haltekonsole 9 und somit den Sichtstrahl 15 insbesondere bezüglich der vorerwähnten Nicht-Einsehbarkeit der Bedien- und/oder Anzeigefläche 14 des gehalterten mobilen Endgeräts 8 durch den Fahrzeugführer an unterschiedliche Randbedingungen, wie Körpergröße des Fahrzeugführers, Sitzhöhenverstellung etc. anpassen zu können, kann besagte Anlagefläche 12 in ihrem Einstellwinkel verstellbar ausgebildet sein, wobei die orthogonale Orientierung des Bodens 13 zur Anlagefläche 12 beibehalten wird. Dies bedeutet, dass die Anlagefläche 12 samt dem rechtwinklig zu derselben angeordneten Boden 13 bevorzugt eine Baueinheit bildet, die schwenkbeweglich und im gewählten Einstellwinkel fixierbar an einem Basiselement der Haltekonsole 9 befestigt ist (nicht zeichnerisch dargestellt). Ausführungsvariante 2 (Fig. 4):
Fig. 4 zeigt eine zweite Ausführungsvariante einer erfindungsgemäß ausgebildeten Anordnung 7 zur Halterung eines mobilen Endgerätes 8 in einem Fahrzeug 2, wobei funktionsgleiche Teile mit gleichen Bezugszeichen wie in den vorherigen Zeichnungsfiguren bezeichnet sind, so dass zu deren Erläuterung auch auf die vorstehende Beschreibung der ersten Ausführungsvariante der Erfindung verwiesen wird. Diese zweite Ausführungsvariante der Erfindung unterscheidet sich zur ersten Ausführungsvariante im Wesentlichen dadurch, dass das gehalterte mobile Endgerät 8 noch besser vor einem Herausfallen aus der Haltekonsole 9 bewahrt ist, indem ein Halteelement 16.2 derart ausgebildet ist, dass das gehalterte mobile Endgerät 8 sowohl an seiner Rückwand 8a und seiner Frontseite 8b als auch an den Seitenkanten 8c, 8d desselben begrenzt ist. Das Halteelement 16.2 ist vorliegend durch ein U-Profil gebildet, welches beidenends im Bereich der Anlagefläche 12 mit der Haltekonsole 9 verbunden ist. Die Fügeverbindung zwischen der Haltekonsole 9 und dem Halteelement 16.2 kann form-, kraft-und/oder stoffschlüssiger Art sein. In Kombination mit der Anlagefläche 12 ist sozusagen ein umlaufender Halterahmen gebildet. Der gebildet Halterahmen ist derart dimensioniert, dass dieser in Anlehnung an die erste Ausführungsvariante der Erfindung mit der Haltekonsole 9 einen sich nach oben erweiternden Aufnahmebereich respektive ein sich nach oben erweiterndes Aufnahmefach bzw. ein Einsteckfach zum komfortablen Bestücken der Haltekonsole 9 mit dem mobilen Endgerät 8 ausbildet.

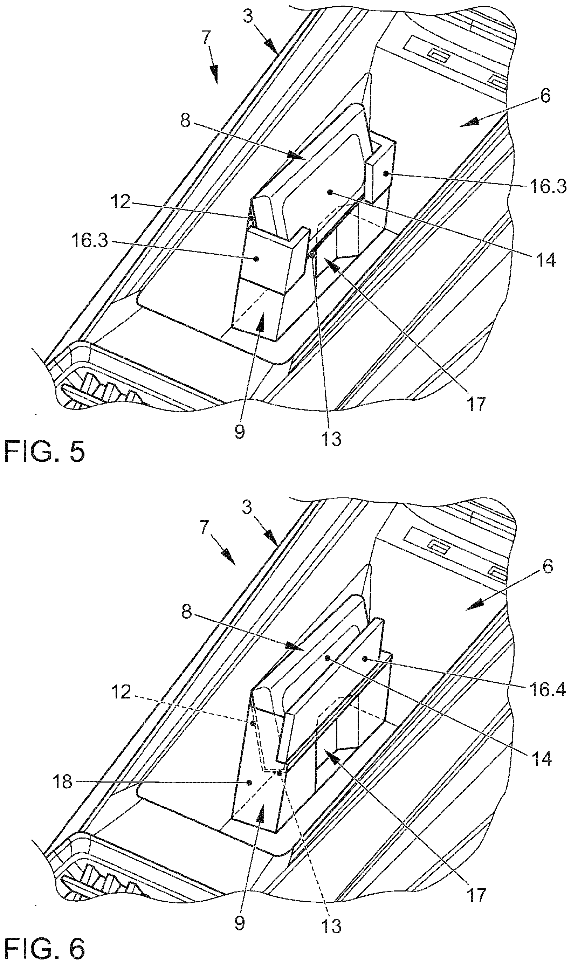

Ausführungsvariante 3 (Fig. 5):
Fig. 5 zeigt eine dritte Ausführungsvariante einer erfindungsgemäß ausgebildeten Anordnung 7 zur Halterung eines mobilen Endgerätes 8 in einem Fahrzeug 2, wobei funktionsgleiche Teile mit gleichen Bezugszeichen wie in den vorherigen Zeichnungsfiguren bezeichnet sind, so dass zu deren Erläuterung auch auf die vorstehende Beschreibung der ersten Ausführungsvariante der Erfindung verwiesen wird. Diese dritte Ausführungsvariante der Erfindung unterscheidet sich insbesondere zur vorbeschriebenen zweiten Ausführungsvariante im Wesentlichen dadurch, dass statt eines umlaufenden Halteelements 16.2 ein im Bereich der Eingriffsvertiefung 17 unterbrochenes Halteelement 16.3 bzw. zwei je eine Seitenkante 8c, 8d und einen Abschnitt der Frontseite 8b des mobilen Endgerätes 8 begrenzende Halteelemente 16.3 vorgesehen ist/sind. Die Fügeverbindung zwischen der Haltekonsole 9 und den Halteelementen 16.3 kann form-, kraft- und/oder stoffschlüssiger Art sein. Die Halteelemente 16.3 sind derart dimensioniert, dass diese in Anlehnung an die vorstehend beschriebenen Ausführungsvarianten der Erfindung mit der Haltekonsole 9 einen sich nach oben erweiternden Aufnahmebereich respektive ein sich nach oben erweiterndes Aufnahmefach bzw. ein Einsteckfach zum komfortablen Bestücken der Haltekonsole 9 mit dem mobilen Endgerät 8 ausbilden.

Ausführungsvariante 4 (Fig. 6):
Fig. 6 zeigt eine vierte Ausführungsvariante einer erfindungsgemäß ausgebildeten Anordnung 7 zur Halterung eines mobilen Endgerätes 8 in einem Fahrzeug 2, wobei funktionsgleiche Teile mit gleichen Bezugszeichen wie in den vorherigen Zeichnungsfiguren bezeichnet sind, so dass zu deren Erläuterung auch auf die vorstehende Beschreibung der ersten Ausführungsvariante der Erfindung verwiesen wird. Diese vierte Ausführungsvariante der Erfindung unterscheidet sich zu den vorbeschriebenen Ausführungsvarianten im Wesentlichen dadurch, dass die Haltekonsole 9 zwei einstückig mit derselben ausgebildete Haltegeometrien 18 aufweist, welche jeweils eine der Seitenkanten 8c, 8d des mobilen Endgerätes 8 begrenzen. Darüber hinaus ist ein Halteelement 16.4 vorgesehen, welches, die besagten Haltegeometrien 18 untereinander verbindend, die Frontseite 8c des mobilen Endgerätes 8 begrenzt. Bevorzugt ist dieses Halteelement 16.4 aus einem Elastomer, insbesondere aus einem elastomeren Kunststoff gebildet. Die Fügeverbindung zwischen der Haltekonsole 9 und dem Halteelement 16.4 kann form-, kraft- und/oder stoffschlüssiger Art sein. Darüber hinaus kann das Halteelement 16.4 beispielsweise nach einem Zweikomponenten-Kunststoff-Spritzgießverfahren bei der Herstellung der Haltekonsole 9 aus Kunststoff ausgebildet sein/werden. Das Halteelement 16.4 ist derart dimensioniert, dass dieses in Anlehnung an die vorstehend beschriebenen Ausführungsvarianten der Erfindung mit der Haltekonsole 9 einen sich nach oben erweiternden Aufnahmebereich respektive ein sich nach oben erweiterndes Aufnahmefach bzw. ein Einsteckfach zum komfortablen Bestücken der Haltekonsole 9 mit dem mobilen Endgerät 8 ausbildet.

Die Erfindung beschränkt sich jedoch nicht auf die vorstehend lediglich beispielgebend beschriebenen Halteelemente 16.1, 16.2, 16.3, 16.4 und Haltegeometrien 18, sondern erfasst jedwede geeignete Ausgestaltung mit Halteelementen 16.1, 16.2, 16.3, 16.4 und Haltegeometrien 18 zur Sicherung des mobilen Endgeräts 8 bei insbesondere dynamischer Fahrt des Fahrzeugs 2. So kann beispielsweise vorgesehen sein, dass die vorbeschriebenen Halteelemente 16.1, 16.2, 16.3, 16.4 durch einstückig mit der Haltekonsole 9 ausgebildete Haltegeometrien und die vorbeschriebenen Haltegeometrien 18 durch an der Haltekonsole 9 festgelegte Halteelemente ersetzt sind (nicht zeichnerisch dargestellt). Darüber hinaus beschränkt sich die Erfindung nicht auf ein Fahrzeug 2 in Form eines Kraftfahrzeugs mit einer insbesondere in einer Mittelkonsole 9 angeordneten Haltekonsole 9, sondern erfasst jedwedes Fahrzeug 2, welches geeignet ist, mit einer Anordnung 7 der erfindungsgemäßen Art ausgestattet zu werden. So können beispielsweise auch ein Luftfahrzeug, ein Wasserfahrzeug, ein Motorrad, ein Fahrrad, ein Pedelec oder dgl. mehr eine Anordnung 7 der erfindungsgemäßen Art aufweisen (nicht zeichnerisch dargestellt).

### Bezugszeichenliste

- 1: Fahrgastzelle
- 2: Fahrzeug
- 3: Mittelkonsole
- 4: Fahrersitz
- 5: Beifahrersitz
- 6: Aufnahmemulde
- 7: Anordnung zur Halterung
- 8: mobiles Endgerät
- 8a: Rückwand
- 8b: Frontseite
- 8c: Seitenkante
- 8d: Seitenkante
- 8e: Oberkante
- 8f: Unterkante
- 9: Haltekonsole
- 10: Koppelbox
- 11: Aufnahmeabschnitt
- 12: Anlagefläche
- 13: Boden
- 14: Bedien- und/oder Anzeigefläche
- 15: Sichtstrahl
- 16.1: Halteelement
- 16.2: Halteelement
- 16.3: Halteelement
- 16.4: Halteelement
- 17: Eingriffsvertiefung
- 18: Haltegeometrie
- "α": Neigungswinkel

## Patentansprüche

1. Anordnung (7) zur Halterung eines mobilen Endgerätes (8) in oder an einem Fahrzeug (2), mit einer Haltekonsole (9), welche einen Aufnahmeabschnitt (11) für das besagte mobile Endgerät (8) aufweist, wobei der Aufnahmeabschnitt (11) ausgehend von einer Vertikalen eine zu derselben geneigt angeordnete Anlagefläche (12), an welcher das mobile Endgerät (8) während der bestimmungsgemäßen Anordnung desselben im Aufnahmeabschnitt (11) mit einer Rückwand (8a) anliegt, sowie einen den Aufnahmeabschnitt (11) nach unten begrenzenden und das mobile Endgerät (8) nach unten abstützenden Boden (13) aufweist, **dadurch gekennzeichnet, dass** infolge einer zwingenden Anordnung der Haltekonsole (9) in dem Fahrzeug (2) und besagter bestimmungsgemäßer Anordnung des mobilen Endgerätes (8) in der Haltekonsole (9) eine eine Bedien- und/oder Anzeigefläche (14) aufweisende Frontseite (8b) des mobilen Endgerätes (8) so geneigt angeordnet ist, dass keine Sichtbedingung zwischen einem von der Bedien- und/oder Anzeigefläche (14) ausgehenden Lichtstrahl und einem Sichtstrahl (15) eines Fahrzeugführers geometrisch erfüllt ist.

2. Anordnung (7) nach Anspruch 1, **dadurch gekennzeichnet, dass** bei besagter bestimmungsgemäßer Anordnung des mobilen Endgerätes (8) in der Haltekonsole (9) die eine Bedien- und/oder Anzeigefläche (14) aufweisende Frontseite (8b) des mobilen Endgerätes (8) so geneigt angeordnet ist, dass eine Sichtbedingung zwischen einem von der Bedien- und/oder Anzeigefläche (14) ausgehenden Lichtstrahl und einem Sichtstrahl (15) eines Beifahrers des Fahrzeugs geometrisch erfüllt ist.

3. Anordnung (7) nach einem der vorhergehenden Ansprüche, **dadurch gekennzeichnet, dass** die Haltekonsole (9) in einer Mittelkonsole (3) des Fahrzeugs (2) angeordnet ist.

4. Anordnung (7) nach einem der vorhergehenden Ansprüche, **dadurch gekennzeichnet, dass** der Anlagefläche (12) gegenüberliegend zumindest ein Halteelement (16.1, 16.2, 16.3, 16.4) angeordnet und/oder eine Haltegeometrie (18) der Haltekonsole (9) für das mobile Endgerät (8) ausgebildet ist/sind.

5. Anordnung (7) nach Anspruch 4, **dadurch gekennzeichnet, dass** das zumindest eine Halteelement (16.1, 16.2, 16.3, 16.4) und/oder die Haltegeometrie (18) derart ausgebildet und orientiert sind, dass ausgehend vom Boden (13) des Aufnahmeabschnittes (11) ein sich nach oben erweiternder Aufnahmebereich für das mobile Endgerät (8) ausgebildet ist.

6. Anordnung (7) nach Anspruch 4 oder 5, **dadurch gekennzeichnet, dass** die Haltekonsole (9) und/oder das zumindest eine Halteelement (16.1, 16.2, 16.3, 16.4) derart ausgebildet sind, das ein gehaltertes mobiles Endgerät (8) sowohl an seiner Rückwand (8a) und seiner Frontseite (8b) als auch zu zumindest einer Seitenkante (8c, 8d) desselben hin begrenzt ist.

7. Anordnung (7) nach einem der vorhergehenden Ansprüche, **dadurch gekennzeichnet, dass** die Haltekonsole (9) im Bodenbereich derselben eine Eingriffsvertiefung (17) zur Entnahme des gehalterten mobilen Endgeräts (8) aufweist oder ausbildet, welche Eingriffsvertiefung (17) von der der Anlagefläche (12) gegenüberliegenden Seite der Haltekonsole (9) her manuell erreichbar ist.

8. Anordnung (7) nach einem der vorhergehenden Ansprüche, **dadurch gekennzeichnet, dass** die Haltekonsole (9) zumindest abschnittsweise eine elastomere Beschichtung aufweist oder durch ein Elastomer gebildet ist.

9. Anordnung (7) nach einem der vorhergehenden Ansprüche, **dadurch gekennzeichnet, dass** die Anlagefläche (12) in ihrem Neigungswinkel "α" verstellbar ausgebildet ist.

10. Fahrzeug (2) mit einer Anordnung (7) nach einem der vorhergehenden Ansprüche.

## Claims

1. Arrangement (7) for holding a mobile terminal (8) in or on a vehicle (2), having a holding bracket (9) which has a receiving portion (11) for the said mobile terminal (8), wherein the receiving portion (11) has, starting from a vertical, a support surface (12), which is arranged inclined in relation to the said receiving portion and against which the mobile terminal (8) bears by way of a rear wall (8a) during arrangement of the said mobile terminal as intended in the receiving portion (11), and also has a base (13) which delimits the receiving portion (11) at the bottom and supports the mobile terminal (8) at the bottom, **characterized in that**, as a result of compulsory arrangement of the holding bracket (9) in the vehicle (2) and the said arrangement of the mobile terminal (8) in the holding bracket (9) as intended, a front side (8b), having an operator control and/or display area (14), of the mobile terminal (8) is arranged inclined such that no viewing condition between a light beam emanating from the operator control and/or display area (14) and a line of view (15) of a vehicle driver is geometrically satisfied.

2. Arrangement (7) according to Claim 1, **characterized in that**, given the said arrangement of the mobile terminal (8) in the holding bracket (9) as intended, the front side (8b), having an operator control and/or display area (14), of the mobile terminal (8) is arranged inclined such that a viewing condition between a light beam emanating from the operator control and/or display area (14) and a line of view (15) of a passenger of the vehicle is geometrically satisfied.

3. Arrangement (7) according to either of the preceding claims, **characterized in that** the holding bracket (9) is arranged in a centre console (3) of the vehicle (2).

4. Arrangement (7) according to one of the preceding claims, **characterized in that** the support surface (12) is arranged opposite at least one holding element (16.1, 16.2, 16.3, 16.4) and/or a holding geometry (18) of the holding bracket (9) is formed for the mobile terminal (8) .

5. Arrangement (7) according to Claim 4, **characterized in that** the at least one holding element (16.1, 16.2, 16.3, 16.4) and/or the holding geometry (18) are formed and oriented in such a way that, starting from the base (13) of the receiving portion (11), a receiving region, which widens towards the top, is formed for the mobile terminal (8).

6. Arrangement (7) according to Claim 4 or 5, **characterized in that** the holding bracket (9) and/or the at least one holding element (16.1, 16.2, 16.3, 16.4) are/is formed in such a way that a held mobile terminal (8) is delimited both at its rear wall (8a) and its front side (8b) and in the direction of at least one side edge (8c, 8d) of the said mobile terminal.

7. Arrangement (7) according to one of the preceding claims, **characterized in that** the holding bracket (9) has or forms, in its base region, an engagement recess (17) for removing the held mobile terminal (8), which engagement recess (17) can be manually reached from that side of the holding bracket (9) situated opposite the support surface (12).

8. Arrangement (7) according to one of the preceding claims, **characterized in that** the holding bracket (9) has an elastomeric coating or is formed by an elastomer at least in portions.

9. Arrangement (7) according to one of the preceding claims, **characterized in that** the support surface (12) is adjustable in respect of its angle of inclination "α".

10. Vehicle (2) having an arrangement (7) according to one of the preceding claims.

## Revendications

1. Agencement (7) pour le maintien d'un terminal mobile (8) dans ou sur un véhicule (2), comprenant une console de maintien (9), qui présente une section de réception (11) pour ledit terminal mobile (8), la section de réception (11) présentant, à partir d'une verticale, une surface d'appui (12) agencée de manière inclinée par rapport à celle-ci, sur laquelle le terminal mobile (8) repose par une paroi arrière (8a) pendant l'agencement conforme de celui-ci dans la section de réception (11), ainsi qu'un fond (13) qui délimite la section de réception (11) vers le bas et qui soutient le terminal mobile (8) vers le bas, **caractérisé en ce qu'**à la suite d'un agencement obligatoire de la console de maintien (9) dans le véhicule (2) et dudit agencement conforme du terminal mobile (8) dans la console de maintien (9), un côté frontal (8b) du terminal mobile (8), présentant une surface de commande et/ou d'affichage (14), est agencé avec une inclinaison telle qu'aucune condition de visibilité n'est satisfaite géométriquement entre un faisceau lumineux provenant de la surface de commande et/ou d'affichage (14) et un faisceau visuel (15) d'un conducteur du véhicule.

2. Agencement (7) selon la revendication 1, **caractérisé en ce que,** lors dudit agencement conforme du terminal mobile (8) dans la console de maintien (9), le côté frontal (8b) du terminal mobile (8), présentant une surface de commande et/ou d'affichage (14), est agencée avec une inclinaison telle qu'une condition de visibilité entre un faisceau lumineux provenant de la surface de commande et/ou d'affichage (14) et un faisceau visuel (15) d'un passager du véhicule est satisfaite géométriquement.

3. Agencement (7) selon l'une quelconque des revendications précédentes, **caractérisé en ce que** la console de maintien (9) est agencée dans une console centrale (3) du véhicule (2).

4. Agencement (7) selon l'une quelconque des revendications précédentes, **caractérisé en ce qu'**au moins un élément de maintien (16.1, 16.2, 16.3, 16.4) est agencé à l'opposé de la surface d'appui (12) et/ou une géométrie de maintien (18) de la console de maintien (9) est formée pour le terminal mobile (8).

5. Agencement (7) selon la revendication 4, **caractérisé en ce que** l'au moins un élément de maintien (16.1, 16.2, 16.3, 16.4) et/ou la géométrie de maintien (18) sont configurés et orientés de telle sorte qu'en partant du fond (13) de la section de réception (11), une zone de réception s'élargissant vers le haut est formée pour le terminal mobile (8).

6. Agencement (7) selon la revendication 4 ou 5, **caractérisé en ce que** la console de maintien (9) et/ou l'au moins un élément de maintien (16.1, 16.2, 16.3, 16.4) sont configurés de telle sorte qu'un terminal mobile maintenu (8) est délimité aussi bien sur sa paroi arrière (8a) et son côté frontal (8b) que sur au moins un bord latéral (8c, 8d) de celui-ci.

7. Agencement (7) selon l'une quelconque des demandes précédentes, **caractérisé en ce que** la console de maintien (9) présente ou forme dans la zone de fond de celle-ci un creux d'engagement (17) pour le retrait du terminal mobile maintenu (8), lequel creux d'engagement (17) étant accessible manuellement depuis le côté de la console de maintien (9) opposé à la surface d'appui (12) .

8. Agencement (7) selon l'une quelconque des revendications précédentes, **caractérisé en ce que** la console de maintien (9), au moins en sections, présente un revêtement élastomère ou est formée par un élastomère.

9. Agencement (7) selon l'une quelconque des revendications précédentes, **caractérisé en ce que** l'angle d'inclinaison « α » de la surface d'appui (12) est configuré pour être réglable.

10. Véhicule (2) comprenant un agencement (7) selon l'une quelconque des revendications précédentes.
